# EUROPEAN PATENT APPLICATION

(11) **EP 4 624 771 A1**
(43) Date of publication of application: **01.10.2025**
(21) Application number: 24166798.9
(22) Date of filing: 27.03.2024
(51) Int. Cl.: F16B 33/00, F16B 5/02

(54) **SEALING ASSEMBLY FOR MOUNTING PARTS OF A SEALING SURFACE**

(60) Divisional application: 25192279.5
(71) Applicant: AAF LTD., Cramlington, Northumberland NE23 8AF (GB)
(72) Inventor: SMITH, Mark, Delaval, WhitleyBay NE25 0PU (GB); WHITE, John, Bedlington, Northumberland NE22 7EN (GB); GRAEME, Denton Turnbill, Ashington, Northumberland NE6 3JQ (GB)
(74) Representative: Haseltine Lake Kempner LLP

(57) **Abstract**

The present invention relates to a sealing assembly (10) for mounting at least two parts of a sealing surface. The sealing assembly (10) includes a first part (14) with a first opening (12), a second part (16), and a sleeve (19) sealing the first opening (12) at the outer diameter of the sleeve (19), whereby the sleeve (19) is sealed by an impermeable barrier within the sleeve (19).

## Description

### Field of the invention

The present invention relates to a sealing assembly for mounting at least two parts of a sealing surface comprising a first part with a first opening, a second part, and a sleeve sealing the first opening at the outer diameter of the sleeve.

### Background of the invention

In many applications, it is necessary to mount various elements of a sealing surface. For example, in filter devices for gas turbines, such sealed mountings are indispensable for guiding a stream to be filtered only through a filter medium foreseen for this purpose. It is important to maintain a stable connection between the elements of the surface as well as to ensure the sealing function of the surface. The filter device usually includes a partition wall for mounting filter elements to a filter housing of a gas turbine.

Conventionally, mounting elements of sealing surfaces is achieved by welding. Welding is a process that joins materials, usually metals or thermoplastics, by causing fusion. However, joint welding comes along with several drawbacks. For example, costly and heavy equipment is needed, and operation at higher temperatures may damage a mounting surface or a mounting element. Furthermore, welding is often associated with increased consumption of energy or material. Alternatively, screw connections may be used here, but then it is problematic to achieve a sealed surface.

It is therefore an object of the present invention to solve the technical problem of overcoming one or more of these drawbacks, and to provide a structurally stable and sealing assembly for mounting parts of a sealing surface.

### Summary

To achieve the above objects, according to one aspect of the present invention there is provided a sealing assembly for mounting at least two parts of a sealing surface comprising a first part with a first opening, a second part, and a sleeve sealing the first opening at the outer diameter of the sleeve, characterised in that the sleeve contains an impermeable barrier sealing a cross-sectional area in the interior of the sleeve.

The sealing assembly comprises at least the first and second parts, which are mounted together, while maintaining the tightness of the sealing surface. Preferably, the sealing assembly may be used in a filter device to secure filter elements therein to cross members. The first part contains the surface to be sealed, with the first opening into which the sleeve is inserted. The second part is intended to be mounted on the first part. The first opening of the first part has a diameter corresponding to an outer diameter of the sleeve, whereby the first opening is sealed. The first opening is preferably a bore or a punching. The sleeve is open at one end, which is located on a side of the first part, which faces the second part. The interior of the sleeve contains the impermeable barrier, which seals a cross-sectional area within the sleeve. The impermeable barrier may be integrally formed with the sleeve and located at the other end of the sleeve opposite the open end.

The sleeve is a tube that fits a counterpart accurately and can also referred to as a socket. The sealing assembly enables the parts to be mounted together in a very simple manner, whereby the sleeve makes the first part a sealed surface. By arranging the sleeve with the impermeable barrier, the first opening of the first part is sealed hermetically. A hermetic seal is the quality of something being airtight, excluding passage of air, oxygen, or other gases.

Preferably, the first part is a cross member and the second part is a filter element of the filter device. Such a cross member is configured to fasten and hold filter elements in the filter device. Particularly preferably, the filter elements are attached to the same side of the cross member.

A notable advantage of this sealing assembly is the simple installation process to achieve a sealed surface without requiring costly welding tools, but just a simple crimping tool for which no special skills are required. Without welding there are no visible welds on the parts, which remain completely aesthetic, avoiding polishing costs or workpiece deterioration as burns or deformations. Further, all materials can be used for the parts of the sealing assembly, because the materials are not heated during installation. Even painted workpieces can be used, as crimping does not damage painted workpieces during installation. An advantage over simple screw connections is an improved sealing of the surface.

According to a further aspect of the invention the second part having a second opening is mounted to the first part by a connection unit put through the second opening and inserted into the sleeve. The second part, intended to be mounted on the first part, contains the second opening. The second opening is preferably a bore or punching. The connection unit is intended to be inserted first through the opening of the second part and then into the sleeve within the first opening of the first part. The connection unit may include a head unit and a shaft unit.

Preferably, the interior of the sleeve is provided with a screw thread at its inner surface, and the connection unit is a screw. The screw thread at the inner surface of the sleeve, hereinafter also referred to as inner thread, allows screwing a pin or bolt with a corresponding outer thread into the sleeve. The screw is such a pin or bolt externally threated and typically made of metal. The resulting screw connection allows simple mounting and a particularly robust connection between the parts of the sealing assembly.

In a further embodiment of the invention an additional part, preferably an additional filter element, is attached to the cross member within the same sealing assembly. Thereby the connection unit is put through two filter elements and into the sleeve contained in the cross member.

Advantageously, at least one of the first opening and the sleeve is provided with a safety mechanism against rotation of the sleeve. The safety mechanism is any device which prevents rotation of the sleeve in the first opening. The safety mechanism may be mounted on both the sleeve and in or at the first opening. An example of such a safety mechanism is a hexagonal first opening in conjunction with a sleeve which is externally hexagon shaped. Such a mechanism significantly increases the stability of the sealing assembly.

In an advantageous improvement of the invention the safety mechanism may be provided by at least one of the first opening and sleeve being hexagonal shaped or knurled. A Hexagon is a six-sided polygon, where the total of the internal angles is 720°. Knurls are circumferential shape deviations that are imprinted in a metal rotation body. These safety mechanisms make the connection between first opening and sleeve more grip and thus prevent slipping and turning.

According to a preferred embodiment of the invention, the sleeve includes at least two portions having different outer diameters. Different outer diameters increase flexibility of possible uses of the sleeve. Preferably, insertion into an opening is easier if the part of a sleeve to be inserted first has a smaller outer diameter than the sealing part with an outer diameter corresponding to the diameter of the opening.

Preferably, the sleeve includes a head portion and a shaft portion. The head portion is larger in outer diameter than the shaft portion and prevents the sleeve from slipping through the first opening. The head portion is preferably a flange head or a countersunk head. The shaft portion extends from the head portion in the direction of the side of the first part, which faces away from the second part and possibly beyond. The shaft is smaller in outer diameter than the head portion.

According to a further aspect of the invention the head portion of the sleeve extends from the first part and functions as a positioning pin for the second part. A positioning pin, also referred to as locating pin, is typically used for controlled, fine tolerance positioning of a workpiece or part to be mounted. In this case, when attaching the second part to the first part, the head portion of the sleeve would snap into the second opening. Thus, blind installation is possible. The design allows crimping even when access to the opposite side of the workpiece is impossible.

Further preferred, the first part and the second part of the sealing assembly are parts of a filter device. The filter device is preferably an air filter device which removes solid particulates such as dust, salt, pollen and bacteria, and/or water from the air.

According to another aspect of the invention the at least two parts of the sealing surface are filter elements. Filter elements are framed units, each carrying a filter medium, through which an inflowing fluid is filtered. Connecting filter elements is one of the main applications of the described sealing assembly.

### Brief description of the drawings

The invention will now be described in greater detail, by way of example, with reference to the schematic drawings, in which:
Fig. 1 is a top view of an exemplary embodiment of a possible application of a sealing assembly in a filter device.
Fig. 2 is a cross-sectional view of a first exemplary embodiment of a sealing assembly.
Fig. 3 is a cross-sectional view of a further exemplary embodiment of a sealing assembly including a connection unit.
Fig. 4 is a cross-sectional view of a further exemplary embodiment of a sealing assembly including a safety mechanism against rotation of a sleeve.
Fig. 5 is a cross-sectional view of an exemplary embodiment of a sleeve having different outer diameters.
Fig. 6 is a cross-sectional view of a further exemplary embodiment of a sealing assembly including a sleeve having different outer diameters.
Fig. 7 is a cross-sectional view of a further exemplary embodiment of a sealing assembly including a sleeve having an extending head portion.

### Detailed description of the invention

Before the present apparatus is described in detail, it is to be understood that this invention is not limited to the assembly described, as these may vary. It is also to be understood that the terminology used in the description is for the purpose of describing the particular versions or embodiments only, and is not intended to limit the scope of the present invention which will be limited only by the appended claims.

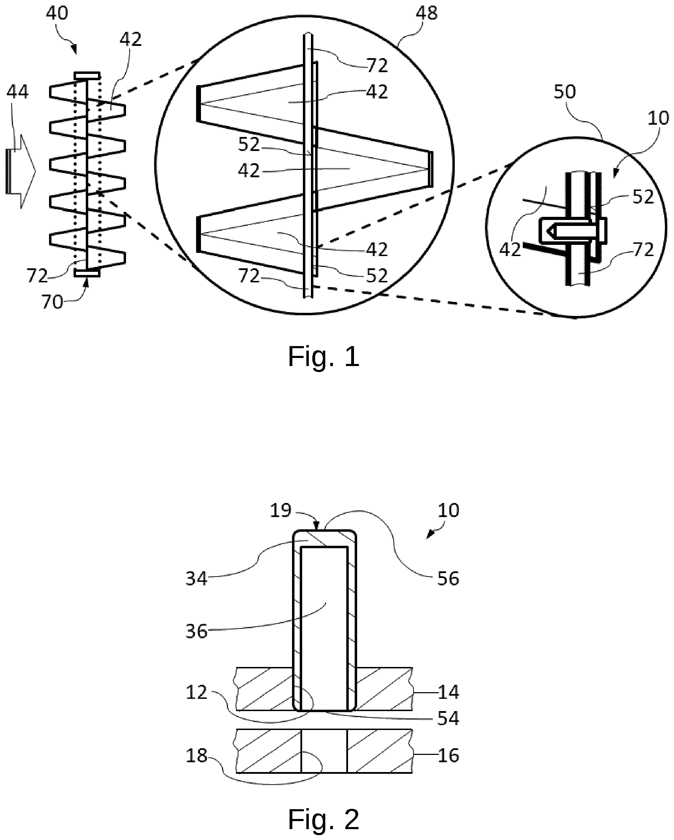

Fig. 1 depicts a cross-sectional top view of a sealing assembly 10 in a first embodiment of the invention, here in a filter device 40 having a main frame 70 with cross members 72. An upper and lower part of the main frame is indicated by the dotted lines. The sealing assembly 10 may be used in the filter device 40 to secure contained filter elements 42 to the cross members 72. The filter device 40 is shown next to an arrow 44 on the left side of Fig. 1, from which a detail has been selected for an enlarged view 48 in the middle of Fig. 1. The trapezoidal units represent filter elements 42 contained in the filter device 40. The enlarged view 48 in the middle of Fig. 1 shows three of these filter elements 42 having contact areas 52 with the cross member 72. A detail of the enlarged view 48 has been selected for a further enlarged view 50 on the right side of Fig. 1. This enlarged view 50 shows the sealing assembly 10 that mounts one of the filter elements 42 to the cross member 72.

On the left side of Fig. 1, the arrow 44 indicates the inflow direction of a fluid, for example air, into the filter device 40. Sealed mountings are indispensable in such filter devices 40 for guiding a stream to be filtered only through a filter medium foreseen for this purpose. It is important to maintain a stable connection between the filter elements 42 and the cross members 72 as well as to ensure the sealing function of the surface. The filter device 40 contains several connected filter elements 42. The filter elements 42 are illustrated trapezium-shaped, which corresponds to the shape of the filter elements seen from above. The filter elements 42 may extend downwards with the two larger sides being open to receive a filter medium, and the larger one of the remaining sides being open to allow inflow or outflow of a fluid to be filtered. The top and bottom side as well as the smaller side of each of the filter elements 42 are completely filled by a frame material. The filter device 40 can include several stacked rows of filter elements with any number of filter elements 42 per row.

In the enlarged view 48 in the middle of Fig.1 and to the right of the top view of the filter device 40 three filter elements 42 of a row are shown. This enlarged view makes the cross member 72 visible, which serves as connecting part between the filter elements 42. The connections of these parts must be absolutely leakproof, so that no fluid can flow past the filter medium. All of the filter elements 42 are mounted to the same side of the cross member 72.

In the enlarged view 50 on the right side of Fig. 1 and to the right of the enlarged view 48 the sealing assembly 10 for mounting filter elements 42 to the cross members 72 is shown. This enlarged view 50 shows the sealing assembly 10, which will be described in detail below.

The following Figs. 2 to 5 show the basic principle of the sealing assembly 10 according to the invention.

Fig. 2 depicts a cross-sectional view of the sealing assembly 10. Starting from the bottom the sealing assembly 10 contains a second part 16 with a second opening 18. Above the second part 16 a first part 14 is arranged with a first opening 12 in which a sleeve 19 is inserted. The interior 36 of the sleeve 19 is open at the bottom end 54. The upper end 56 of the sleeve 19 is sealed by an impermeable barrier 34.

The parts of a sealing surface to be mounted are fragmentarily shown as the first part 14 and the second part 16. The first part 14 contains a first opening 12, and the second part 16 contains a second opening 18. A sleeve 19 is inserted into the first opening 12 sealing the first opening 12 at the outer diameter of the sleeve 19. The open bottom end 54 of the sleeve 19 allowing access to the interior 36 is flush with the surface of the first part 14 and faces the second part 16. The upper end 56 as well as all other portions of the sleeve 19 are closed. More specifically, the sleeve 19 is sealed by an impermeable barrier 34 within the sleeve 19. The assembly 10 enables the parts 14, 16 to be mounted together in a very simple manner, whereby the sleeve 19 makes the first part 14 a hermetically sealed surface. A hermetic seal is the quality of something being airtight, excluding passage of air, oxygen, or other fluids.

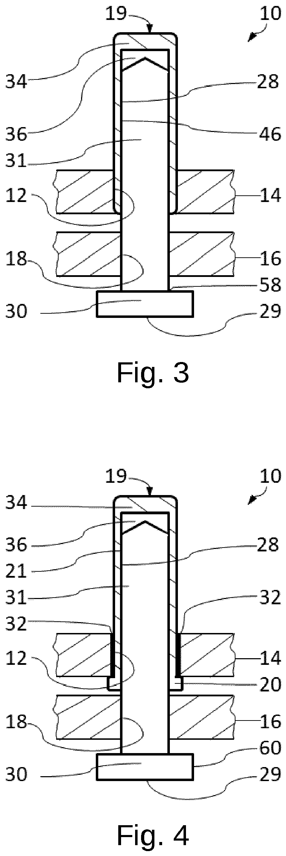

Fig. 3 depicts a cross-sectional view of the sealing assembly 10 including a connection unit 29. As in Fig. 2 the sealing assembly 10 contains two superimposed parts 14, 16, each with an opening 12, 18, wherein in the first opening 12 of the first part 14 a sleeve 19 with an impermeable barrier 34 is inserted. The connection unit 29 contains a head unit 30 and a shaft unit 31. The shaft unit 31 is partly inserted into the sleeve 19. The head unit 30 protrudes downwards.

This connection unit 29 is put through the second opening 18 of the second part 16 from the side facing away from the first part 14 and inserted into the sleeve 19 in order to firmly connect the second part 16 with the first part 14. The connection unit 29 is provided with a head unit 30 and a shaft unit 31, whereby the head unit 30 is larger in outer diameter than the shaft unit 31. In this example, the connection unit 29 is a screw 58. Alternatively, the connection unit 29 could be a plug or any other insert element. In his case, where the connection unit 29 is a screw 58, the interior 36 of the sleeve 19 is provided with a screw thread 46 at its inner surface 28. The resulting screw connection allows simple mounting and a particularly robust connection between the parts 14, 16 of the sealing assembly 10.

Fig. 4 depicts a cross-sectional view of the sealing assembly 10 including a safety mechanism 32 against rotation of the sleeve 19. As in Fig. 3 the sealing assembly 10 contains two superimposed parts 14, 16, each with an opening 12, 18, a sleeve 19 inserted in the first opening 12 of the first part 14, and a connection unit 29 with a head portion 30 protruding downwards and a shaft portion 31 partly inserted in the sleeve 19. In Fig. 4, the sleeve 19 of the sealing assembly 10 contains a head portion 20 and a shaft portion 21. Additionally, in Fig. 4 the sealing assembly 10 includes a safety mechanism 32 shown outside the sleeve 19 in the first opening 12.

The first opening 12 is provided with such a safety mechanism 32. Rotation of the sleeve 19 can be prevented, for example, if the first opening 12 and/or the sleeve 19 are/is hexagonal shaped or knurled. As further shown in Fig. 4, the sleeve 19 includes a head portion 20 and a shaft portion 21, whereby the shaft portion 21 extends from the head portion 20 and is smaller in outer diameter than the head portion 20. The head portion 20 prevents the sleeve 19 from slipping through the first opening 12. The head portion 20 may be, for example, a flange head or a countersunk head. In this case the head portion 30 is a flange head 60.

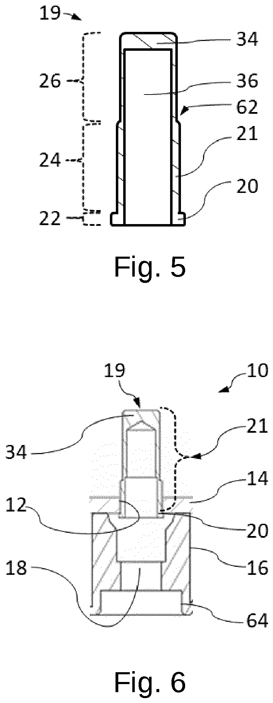

Fig. 5 depicts a cross-sectional view of the sleeve 19 having different outer diameters. Specifically, the sleeve 19 shown in Fig. 5 has three stepped portions 22, 24, 26, whereby the portion 22 with the largest diameter corresponds to the head portion 20 of the sleeve 19. The remaining stepped portions 24, 26 belong to the shaft portion 21 of the sleeve 19. The impermeable barrier 34 is located in the portion 26 with the smallest diameter. The stepped structure 62 of the sleeve 19 provides more flexible application possibilities and makes it easier to insert the sleeve 19 into an opening.

Fig. 6 depicts a cross-sectional view of an exemplary embodiment of the sealing assembly 10 including a sleeve 19 having different outer diameters. As in Fig. 2 the sealing assembly 10 contains two superimposed parts 14, 16, each with an opening 12, 18, and a sleeve 19 inserted in the first opening 12 of the first part 14.

The here used sleeve 19 could be, for example, the sleeve 19 shown in Fig. 5, having three stepped portions 22, 24, 26, whereby the portion with the largest diameter 22 corresponds to the head portion 20 of the sleeve 19. In this embodiment the second opening 18 of the second part 16 has a special shape 64, which allows the countersinking of a head unit 30 of a connection unit 29, as shown in Fig. 4. Apart from that, the features of the sealing assembly 10 in Fig. 6 may contain the same features as the sealing assembly in Fig. 2.

Preferably, the parts 14, 16 are formed as the cross member 72 and the filter element 42 in Fig.1. Furthermore, it is possible to attach an additional part (not shown) to the first part 14 within the same sealing assembly 10. Thereby, the connection unit 29, as shown in Fig. 4, may be put through two parts 16, preferably filter elements 42 in Fig.1, and into the sleeve 19 inserted in the part 14, preferably the cross member 72 in Fig.1.

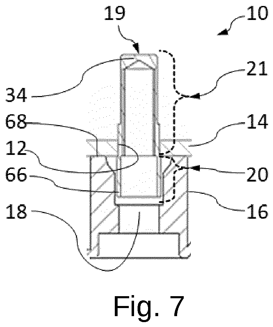

Fig. 7 depicts a cross-sectional view of a further exemplary embodiment of the sealing assembly 10 including a sleeve 19 having an extending head portion 20. As in Fig. 6 the sealing assembly 10 contains two superimposed parts 14, 16, each with an opening 12, 18, and a sleeve 19 having a head portion 20 and a shaft portion 21 inserted in the first opening 12 of the first part 14. However, the head portion 20 of the sleeve 19 in Fig. 7 protrudes into the second opening 18 of the second part 16.

More precisely, the head portion 20 protrudes clearly from the first opening 12 of the first part 14 and is received by a correspondingly adapted second opening 18 of the second part 16. When mounting, the protruding head portion 20 of the sleeve 19 serves as a positioning pin 66 for the second part 16. This assembly 10 allows blind mounting even if access to a back side 68 of the second part 16 is impossible. Preferably, also here the parts 14, 16 are formed as the cross member 72 and the filter element 42 in Fig.1, and possibly the additional filter element (not shown) may be attached to the cross member 72 within the same sealing assembly 10.

The previous detailed description has been provided for the purposes of illustration and description. Thus, although there have been described particular embodiments of the present invention of a sealing assembly, it is not intended that such references be constructed as limitations up-on the scope of this invention except as set forth in the following claims.

### List of reference signs

- 10: sealing assembly
- 12: first opening
- 14: first part
- 16: second part
- 18: second opening
- 19: sleeve
- 20: head portion
- 21: shaft portion
- 22: portion of a sleeve
- 24: portion of a sleeve
- 26: portion of a sleeve
- 28: inner surface
- 29: connection unit
- 30: head unit
- 31: shaft unit
- 32: safety mechanism
- 34: impermeable barrier
- 36: interior of a sleeve
- 40: filter device
- 42: filter element
- 44: arrow
- 46: screw thread
- 48: enlarged view
- 50: enlarged view
- 52: contact area
- 54: bottom end
- 56: upper end
- 58: screw
- 60: flange head
- 62: stepped structure
- 64: special shape
- 66: positioning pin
- 68: back side
- 70: main frame
- 72: cross member

## Claims

1. A sealing assembly (10) for mounting at least two parts of a sealing surface comprising:
a first part (14) with a first opening (12), a second part (16), and a sleeve (19) sealing the first opening (12) at the outer diameter of the sleeve (19),
**characterised in that** the sleeve (19) contains an impermeable barrier (34) sealing a cross-sectional area in the interior (36) of the sleeve (19).

2. The sealing assembly (10) according to any one of the preceding claims, wherein the second part (16) having a second opening (18) is mounted to the first part (14) by a connection unit (29) put through the second opening (18) and inserted into the sleeve (19).

3. The sealing assembly (10) according to claim 2,
wherein the interior (36) of the sleeve (19) is provided with a screw thread (46) at its inner surface (28), and the connection unit (29) is a screw (58).

4. The sealing assembly (10) according to any one of the preceding claims, wherein at least one of the first opening (12) and the sleeve (19) is provided with a safety mechanism (32) against rotation of the sleeve (19).

5. The sealing assembly (10) according to any one of the preceding claims, wherein the safety mechanism (32) is provided by at least one of the first opening (12) and the sleeve (19) being hexagonal shaped or knurled.

6. The sealing assembly (10) according to any one of the preceding claims, wherein the sleeve (19) includes at least two portions having different outer diameters.

7. The sealing assembly (10) according to any one of the preceding claims, wherein the sleeve (19) includes a head portion (20) and a shaft portion (21) extending from the head portion (20) and being smaller in outer diameter than the head portion (20), whereby the head portion (20) is preferably a flange head (60) or a countersunk head.

8. The sealing assembly (10) according to claim 6
wherein the head portion (20) of the sleeve (19) extends from the first part (14) and functions as a positioning pin (66) for the second part (16).

9. The sealing assembly (10) according to any one of the preceding claims, wherein the first part (14) and the second part (16) are parts of a filter device (40).

10. The sealing assembly (10) according to any one of the preceding claims, wherein the at least two parts of the sealing surface are filter elements (42).
